# EUROPÄISCHE PATENTSCHRIFT

(11) **EP 2 221 097 B1**
(45) Veröffentlichungstag und Bekanntmachung des Hinweises auf die Patenterteilung: **28.06.2017**
(21) Anmeldenummer: 10153047.5
(22) Anmeldetag: 09.02.2010
(51) Int. Cl.: B01D 46/00, B01D 53/04, F02M 25/08, B60K 15/035

(54) **Filtereinrichtung zur Kohlenwasserstoffadsorption**
Filter device for hydrocarbon adsorption
Dispositif de filtre destiné à l'adsorption d'hydrocarbures

(30) Priorität: 20.02.2009 DE 102009009805
(43) Veröffentlichungstag der Anmeldung: 25.08.2010
(73) Patentinhaber: Mahle International GmbH, 70376 Stuttgart (DE)
(72) Erfinder: Donadei, Olivier, 95300 Ennery (FR); Flach, Matthias, 71686 Remseck (DE); Lalardie, Philippe, 95210 Saint Gratien (FR); Lamotte, Johann, 95260 Beaumont sur Oise (FR); Ruffet, Valentin, 92500 Rueil Malmaison (FR)
(74) Vertreter: BRP Renaud & Partner mbB Rechtsanwälte Patentanwälte Steuerberater

(56) Entgegenhaltungen:
- EP-A1- 0 501 540
- EP-A1- 1 502 793
- WO-A1-2008/106587
- WO-A2-2007/087102
- DE-A1-102007 056 852
- US-A- 4 300 918
- US-A- 4 589 852
- US-A- 5 024 687
- US-A- 5 638 786
- US-A- 5 912 368
- US-A1- 2004 007 135
- US-A1- 2007 245 700
- US-A1- 2009 159 039

## Beschreibung

Die vorliegende Erfindung betrifft eine Filtereinrichtung zur Kohlenwasserstoffadsorption, insbesondere eine Luftfiltereinrichtung.

Filtereinrichtungen zur Kohlenwasserstoffadsorption mit einem insbesondere Aktivkohle aufweisenden Filterelement, sind insbesondere im Bereich einer Tankentlüftung bei modernen Kraftfahrzeugen angeordnet, um ein unkontrolliertes Entweichen von Kohlenwasserstoffen in die Umgebung verhindern zu können. Die in der Filtereinrichtung angeordnete Aktivkohle absorbiert dabei die aus dem Tank gasförmig flüchtenden Kohlenwasserstoffe und gibt diese beim Betrieb einer Brennkraftmaschine wieder ab, da dann die Filtereinrichtung in entgegengesetzter Richtung mit Frischluft gespült wird. Um den Wirkungsgrad der in der Filtereinrichtung vorhandenen Aktivkohle auch über längere Zeit auf einem konstant hohem Niveau halten zu können, ist es erforderlich, diese insbesondere im Spülbetrieb vor einer feuchten Frischluftzufuhr zu schützen. Aus diesem Grund werden bei bekannten Filtereinrichtungen bspw. lange Schläuche verwendet, die zudem einen Siphon bilden, mit welchem versucht wird, den Feuchtegehalt der im Spülbetrieb der Filtereinrichtung angesaugten Luft zu reduzieren. Nachteilig bei derartigen Schlauchlösungen ist jedoch, dass diese konstruktiv aufwendig und teuer sind und zudem einen nicht unerheblichen Bauraumbedarf beanspruchen. EP1502793 offenbart (Fig. 1-3; [0029]-[0034]) eine Filtereinrichtung (10, 12) zur Kohlenwasserstoffadsorption (14, 16) mit einem Filtergehäuse (12) mit einem Filterelement (14, 16) und einer labyrinthartigen Kanalstruktur ([0029]) über der Ansaugöffnung (50), sowie eine weitere Öffnung (51, 70) am Boden der Struktur ([0029], [0034]). Störstrukturen (52, 54, 58) unterstützen die Wasserabscheidung ([0030]-[0031]).

US4300918 zeigt in Fig. 2 ebenfalls labyrinthartige Abscheide-Strukturen (16, 18, 20) mit Störstrukturen (22) entgegen der Strömungsrichtung, die der Wasserabscheidung vor einem Koaleszenz-Filter dienen. Die vorliegende Erfindung beschäftigt sich daher mit dem Problem, für eine Filtereinrichtung eine verbesserte Ausführungsform anzugeben, welche insbesondere kompakter baut.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, bei einer an sich bekannten Filtereinrichtung zur Kohlenwasserstoffadsorption, insbesondere bei einer Luftfiltereinrichtung, ein einen Ansaugkanal derselben überdeckendes Gehäuse vorzusehen, welches eine innen liegende, labyrinthartige Kanalstruktur aufweist, die einen Ends mit dem Ansaugkanal und anderen Ends mit einer bodenseitigen Öffnung des Gehäuses kommunizierend verbunden ist. Über den Ansaugkanal ist somit die eigentliche Filtereinrichtung mit einer Umgebung verbunden und saugt über diesen im Spülbetrieb Frischluft an. Durch das erfindungsgemäße, den Ansaugkanal überdeckende Gehäuse mit seiner labyrinthartigen Kanalstruktur und den wellenförmig ausgebildeten Abscheidekonturen mit entgegen der Strömungsrichtung ausgebildeten Störkonturen kann eine effektive Reduzierung der Feuchte der Ansaugluft, das heißt eine effektive Reduzierung des Wassergehalts der Ansaugluft, bei gleichzeitig äußerst kompakter Bauweise erreicht werden. In einem Filtergehäuse der Filtereinrichtung ist dabei ein üblicherweise Aktivkohle aufweisendes Filterelement angeordnet, welches zur Adsorption von Kohlenwasserstoffen ausgebildet ist. Durch die labyrinthartige Kanalstruktur innerhalb des auf den Ansaugkanal aufgesetzten Gehäuses, wird die angesaugte Luft gezwungen, einen deutlich längeren Weg zurückzulegen und eine deutlich längere Dauer innerhalb des Gehäuses zu verweilen, was sich beides positiv auf die Reduzierung des Wassergehaltes der angesaugten Luft auswirkt. Durch die bodenseitig am Gehäuse angeordnete Öffnung, kann diese nicht nur als Einströmöffnung zum Ansaugen von Frischluft im Spülbetrieb genutzt werden, sondern zugleich auch als Wasserablauföffnung, durch welche in dem Gehäuse abgeschiedenes Wasser allein aufgrund der Schwerkraft nach außen in die Umgebung abfließen kann. Mit dem Gehäuse kann somit nicht nur eine Verbesserung hinsichtlich der Reduzierung des Wassergehalts der Ansaugluft und damit eine Verbesserung der Filterleistung der Aktivkohle erreicht werden, sondern zugleich auch eine besonders kompakte Bauweise, die im Hinblick auf einen immer enger werdenden Motorraum von besonderem Vorteil ist.

Bei einer vorteilhaften Weiterbildung der erfindungsgemäßen Lösung, ist das Gehäuse aus Kunststoff, insbesondere als Kunststoffspritzgussteil, hergestellt und bildet einen integralen Bestandteil des Filtergehäuses der Filtereinrichtung. Somit ist denkbar, dass das Gehäuse zur Wasserabscheidung entweder als separates Bauteil ausgebildet ist und später in einem einfachen Montagevorgang mit dem Ansaugkanal bzw. dem Filtergehäuse der Filtereinrichtung verbunden, bspw. verclipst, wird, oder dass das Gehäuse bereits einen integralen Bestandteil des Filtergehäuses der Filtereinrichtung bildet und somit zusammen mit dieser in einem einzigen gemeinsamen Arbeitsschritt hergestellt, bspw. gespritzt, werden kann. Besonders die letzte Lösung bietet dabei eine besonders kostengünstige Möglichkeit der Fertigung der erfindungsgemäßen Filtereinrichtung.

Bei einer weiteren vorteilhaften Ausführungsform der erfindungsgemäßen Lösung, ist in der Kanalstruktur eine der bodenseitigen Öffnung gegenüberliegende, insbesondere oberhalb dieser angeordneten, Prallwand vorgesehen. Auf die Prallwand strömt somit im Spülbetrieb der Filtereinrichtung die angesaugte und in das Gehäuse einströmende Luft, wobei sich bereits erste Wasserpartikel an der Prallwand abscheiden und unmittelbar nach unten durch die Öffnung in die Umgebung ablaufen können. Die Prallwand stellt somit ein erstes Strömungshindernis innerhalb der Kanalstruktur dar, welches selbstverständlich noch durch die die wasserabscheidende Wirkung erhöhenden Materialien, bspw. Vlies, etc., belegt sein kann. Generell ist dabei die gesamte in dem Gehäuse angeordnete Kanalstruktur derart ausgebildet, dass sich unabhängig vom Abscheideort abgeschiedenes Wasser allein aufgrund der Schwerkraft nach unten zur bodenseitigen Öffnung bewegen, und damit allein schwerkraftbedingt, nach außen abfließen kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1a, b: eine Außenansicht auf ein an einer Filtereinrichtung angeordnetes Gehäuse,
- Fig. 2a-c: unterschiedliche Schnittdarstellungen durch das Gehäuse,
- Fig. 3: eine labyrinthartige Kanalstruktur, die durch einen den Filtertopf bodenseitig verschließenden Filtertopfdeckel gebildet wird,
- Fig. 4: eine erfindungsgemäße Ausführungsform eines Gehäuses der Filtereinrichtung,
- Fig. 5: eine labyrinthartige Kanalstruktur, die durch zusammenwirkende und jeweils am Filtertopf und am Deckel ausgebildete Labyrinthbereiche gebildet wird,
- Fig. 6: eine Detaildarstellung aus Fig. 5,
- Fig. 7: eine Darstellung wie in Fig. 5, jedoch bei einer anderen Ausführungsform,
- Fig. 8: eine Detaildarstellung aus Fig. 7,

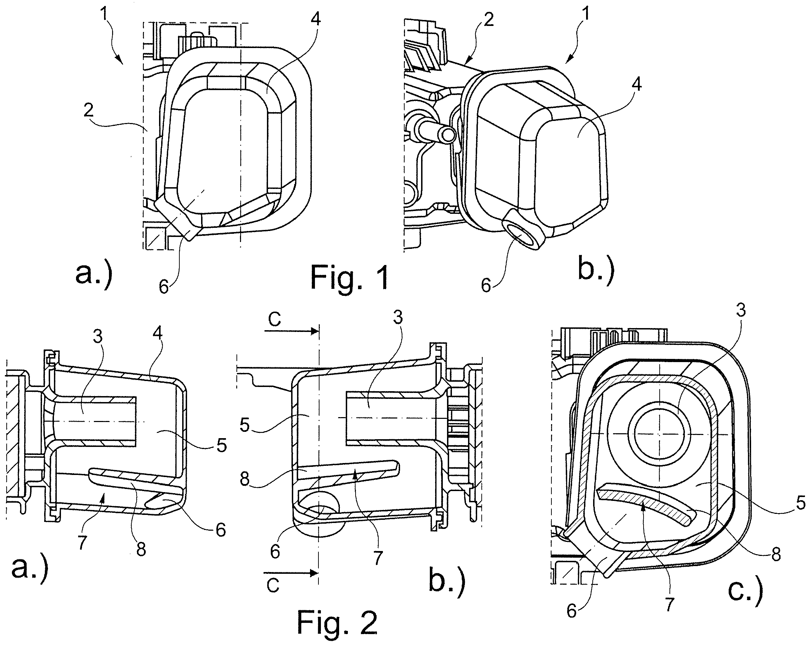

Entsprechend den Figuren 1 a und 1 b, weist eine erfindungsgemäße Filtereinrichtung 1 zur Kohlenwasserstoffadsorption, insbesondere eine Luftfiltereinrichtung im Bereich einer Tankentlüftung, ein Filtergehäuse 2 auf, in welchem wenigstens ein Aktivkohle aufweisendes Filterelement angeordnet ist. Das Filtergehäuse 2 weist einen Ansaugkanal 3 auf (vgl. die Figuren 2a bis 2c), über welchen die Filtereinrichtung 1 mit einer Umgebung verbunden ist und über welchen in einem Spülbetrieb Frischluft von außen ansaugbar ist. Der Ansaugkanal 3 dient beim Stillstand einer mit der Filtereinrichtung 1 verbundenen Brennkraftmaschine als Entlüftungsöffnung, für insbesondere eine Tankentlüftung, sodass bspw. beim Befüllen des Tanks Luft aus diesem über den Ansaugkanal 3 nach außen gelangen kann. Zuvor wird die mit Kohlenwasserstoffen befrachtete Luft durch das Aktivkohlefilter gepresst, wobei die Kohlenwasserstoffe von der Aktivkohle adsorbiert werden, sodass vorzugsweise ausschließlich kohlenwasserstofffreie Luft über den Ansaugkanal 3 nach außen gelangt. Beim Betrieb der Brennkraftmaschine wird das Aktivkohlefilter rückgespült, indem die Brennkraftmaschine über den Ansaugkanal 3 Frischluft von außerhalb ansaugt. Durch die angesaugte Frischluft werden die im Aktivkohlefilter absorbierten Kohlenwasserstoffe der Verbrennung in der Brennkraftmaschine zugeführt und dadurch das Aktivkohlefilter selbst wieder regeneriert. Um eine hohe Absorptionswirkung der Aktivkohle möglichst langfristig erhalten zu können, ist es wichtig, dass beim Ansaugen von Frischluft, das heißt bei einem Spülvorgang, nach Möglichkeit trockene Luft mit einem lediglich geringen Feuchtigkeitsanteil angesaugt wird. Dies wird bislang durch auf den Ansaugkanal 3 aufgesteckte Leitungen, insbesondere Schläuche, bewirkt, die darüber hinaus eine Art Siphon bilden. Nachteil dieser Schläuche ist jedoch, dass diese einen nicht zu unterschätzenden Platzbedarf in einem ohnehin beengten Motorraum erfordern. Es ist nun ein den Ansaugkanal 3 überdeckendes Gehäuse 4 vorgesehen, welches eine innen liegende, labyrinthartige Kanalstruktur 5 aufweist, die einen Ends mit dem Ansaugkanal 3 und anderen Ends mit einer bodenseitigen Öffnung 6 des Gehäuses 4 kommunizierend verbunden ist. Die labyrinthartige Kanalstruktur verlängert den Weg, welche die angesaugte Frischluft beim Spülbetrieb der Filtereinrichtung 1 bis zum Ansaugkanal 3 zurücklegen muss, sodass durch den verlängerten Strömungsweg bereits eine wahrnehmbare Reduzierung des Feuchtegehalts der angesaugten Frischluft erreicht werden kann. Durch die labyrinthartige Kanalstruktur 5, welche komplett innerhalb des Gehäuses 4 angeordnet ist, kann die Filtereinrichtung 1 insgesamt kompakter bauen, als dies bei Lösungen mit Schläuchen bisher der Fall war. Durch die bodenseitige Öffnung 6 im Gehäuse 4, kann darüber hinaus innerhalb des Gehäuses 4 abgeschiedenes Wasser allein aufgrund der Schwerkraft nach unten aus dem Gehäuse 4 ablaufen.

Das Gehäuse 4 ist dabei vorzugsweise aus Kunststoff, insbesondere als Kunststoffspritzgussteil, hergestellt und bildet bei einer besonders bevorzugten Ausführungsform einen integralen Bestandteil des Filtergehäuses 2. Dies ermöglicht es, das Gehäuse 4 zusammen mit dem Filtergehäuse 2 in einem gemeinsamen Arbeitsschritt herzustellen, wozu lediglich ein entsprechendes Spritzgusswerkzeug entsprechend abgeändert werden muss. Bei einer separaten Ausbildung des Gehäuses 4 ist dagegen vorstellbar, dass dieses wie bisher am Anschlusskanal 3 angeordnete Schläuche ersetzt und dadurch eine Nachrüstung bereits hergestellter Filtereinrichtungen erlaubt. Ein separat hergestelltes Gehäuse 4 kann dabei bspw. über entsprechende Clips- und/oder Rastkonturen am Filtergehäuse 2 befestigt werden.

Innerhalb der Kanalstruktur 5 ist eine der bodenseitigen Öffnung 6 gegenüberliegende, insbesondere oberhalb derselben angeordnete, Prallwand 7 vorgesehen, die beim Einströmen von angesaugter Frischluft durch die Öffnung 6 bereits eine Vorabscheidung von aerosol in der Frischluft gelösten Wassertröpfchen bewirkt. Durch die Neigung der Prallwand 7 kann das daran abgeschiedene bzw. angelagerte Wasser nach unten durch die Öffnung 6 einfach ablaufen. Prinzipiell ist dabei die gesamte Kanalstruktur 5 derart ausgebildet, dass unabhängig vom Abscheideort des Wassers innerhalb der Kanalstruktur 5, dieses problemlos nach unten hin zur Öffnung 6 abfließen kann. Betrachtet man die Figuren 2a bis 2c, so kann man erkennen, dass die Prallwand 7 zumindest leicht gekrümmt ist und dass die Prallwand 7 Rippen 8 aufweist, die die Aufgabe von Strömungsleitelementen übernehmen können. Selbstverständlich kann dabei die Prallwand 7 auch mit einem die Wasserabscheidung begünstigenden Material belegt sein.

Durch die Tatsache, dass die bodenseitige Öffnung 6 an der tiefsten Stelle des Gehäuses 4 angeordnet ist, kann das im Gehäuse 4 abgeschiedene Wasser stets ablaufen, ohne dass sich Wasseransammlungen innerhalb des Gehäuses 4 bilden. Das Filtergehäuse 2 mit dem das Gehäuse 4 verbunden, z.B. angeschweißt oder angeclipst ist, kann oberhalb oder unterhalb der bodenseitigen Öffnung 6 angeordnet sein, je nach Anforderung im Fahrzeug.

Durch die Filtereinrichtung 1 kann eine einerseits kostengünstige und andererseits effektive Wasserabscheidung beim Ansaugen von Frischluft erreicht werden, wobei das abgeschiedene Wasser über die Öffnung 6 selbsttätig abläuft und nicht wie bisher bei Wartungsarbeiten aus einem Siphon entfernt werden müsste. Durch die Ausgestaltung der Kanalstruktur 5 innerhalb des Gehäuses 4, kann darüber hinaus eine äußerst kompakte Bauweise erreicht werden, was insbesondere bei den heutzutage sehr beengten Motorräumen von großem Vorteil ist.

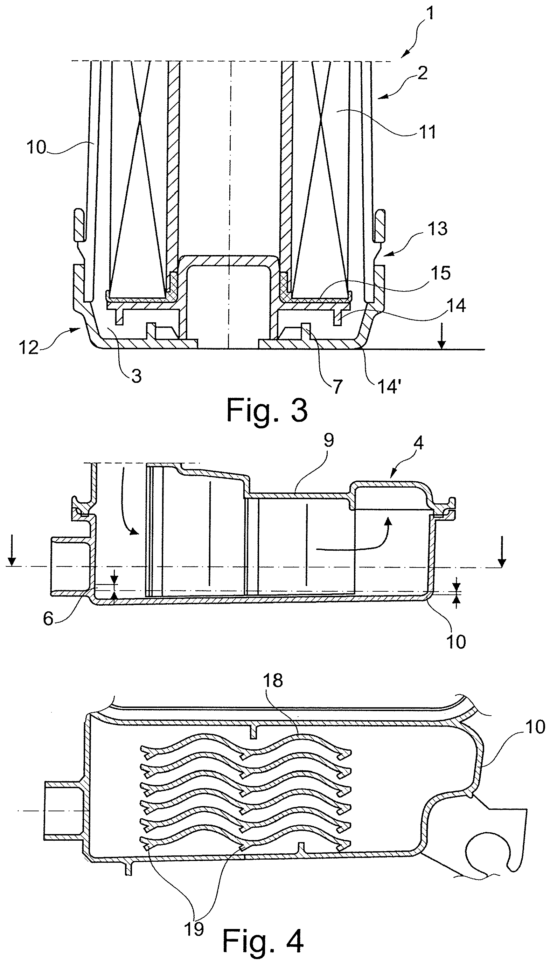

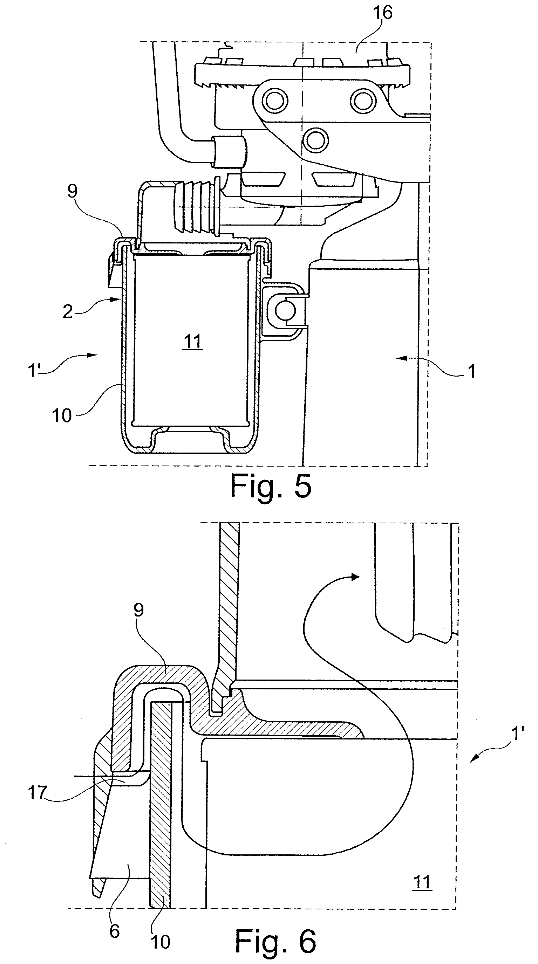

Gemäß der Fig. 3 ist eine Filtereinrichtung 1, insbesondere ein Staubfilter, mit einem, einen Filtertopf 10 aufweisenden Filtergehäuse 2 gezeigt, in welchem wenigstens ein Filterelement 11 angeordnet ist. Die labyrinthartige Kanalstruktur 5 wird dabei durch einen den Filtertopf 10 bodenseitig verschließenden Filtertopfdeckel 12 gebildet, der insbesondere zweiteilig ausgebildet sein und mit dem Filtertopf 10 über eine Rastverbindung 13 verrastet sein kann. Der eine Teil 14 des Filtertopfdeckels 12 greift dabei in das Filterelement 11 ein und liegt an einer Endscheibe 15 desselben an. Der andere Teil 14' des Filtertopfdeckels 12 spannt dabei über die Rastverbindung 13 den Teil 14 gegen das Filterelement 11 vor. Die Rastverbindung 13 wird dabei über filtertopfdeckelseitige Rastelemente und filtertopfseitige Rastkonturen gebildet. Die Rastverbindung 13 kann als leicht lösbare und leicht montierbare Clipsverbindung ausgebildet sein, deren Komponenten an den Filtertopf 10 bzw. an den Filtertopfdeckel 12 angespritzt sein können. Diese Filtereinrichtung 1 ist Teil eines Moduls zur Reinigung der aus einem Tank entweichenden und mit Kohlenwasserstoffen angereichterten Luft (siehe auch Fig. 5 bis 8).

In der Fig. 4 ist ein Gehäuse 4 gezeigt, welches ebenfalls im Bereich eines Bodens eine Öffnung 6 aufweist, durch welche abgeschiedenes Wasser austreten kann. Innerhalb des Gehäuses 4 sind dabei Abscheidekonturen 18 angeordnet, die ebenfalls den Wasserabscheidegrad erhöhen. Die erfindungsgemäßen Abscheidekonturen 18 sind dabei wellenförmig ausgebildet und besitzen entgegen der Strömungsrichtung orientierte Störkonturen 19. Die Abscheidekonturen 18 können dabei einen integralen Bestandteil eines Deckels 9 oder eines Topfes 10 bilden. An den Abscheidekonturen 18 bildet sich ein Wasserfilm aus der durch die Schwerkraft in Richtung der bodenseitigen Öffnung 6 fließen kann. Die Oberfläche der Abscheidekonturen 18 kann zum Beispiel beschichtet oder konturiert sein, damit sich leichter ein Wasserfilm bildet.

Gemäß den Fig. 5 und 6 ist eine Filtereinrichtung 1', insbesondere ein Staubfilter, der in den Ansaugweg einer Filtereinrichtung 1 mit Aktivkohle zur Reinigung integriert ist, mit einem, einen Deckel 9 und einen Filtertopf 10 aufweisenden Filtergehäuse 2 gezeigt, in welchem wenigstens ein Filterelement 11 angeordnet ist. Über einen zwischen dem Deckel 9 und dem Filtertopf 10 ausgebildeten Ringspalt 17 ist die Filtereinrichtung 1' mit einer Umgebung verbunden. Diesem Ringspalt 17 ist die labyrinthartige Kanalstruktur 5 zugeordnet, die eine Wasserabscheidung bewirkt und zumindest eine Öffnung 6 zum Wasserablauf aufweist. Die labyrinthartige Kanalstruktur 5 wird in diesem Fall durch zusammenwirkende und jeweils am Filtertopf 10 und am Deckel 9 ausgebildete Labyrinthbereiche gebildet wird. Hierdurch ergibt sich auch der Ringspalt 17 (vgl. Fig. 6) durch welchen Frischluft angesaugt wird. Wie insbesondere der Fig. 5 zu entnehmen ist, ist dabei die Filtereinrichtung 1' der Diagnosepumpe 16 vorgeschaltet, die wiederum stromauf der Filtereinrichtung 1 angeordnet ist. Zusammen ergeben die Komponenten ein Modul zur Reinigung der aus einem Tank entweichenden mit Kohlenwasserstoffen angereichterten Luft.

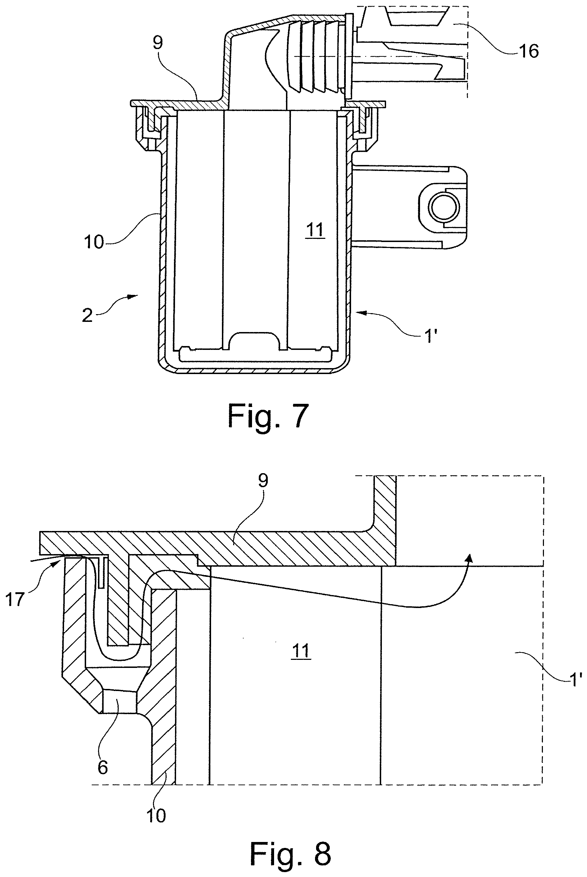

Gemäß den Fig. 7 und 8 ist ebenfalls eine Filtereinrichtung 1', insbesondere ein Staubfilter, mit einem, einen Deckel 9 und einen Filtertopf 10 aufweisenden Filtergehäuse 2 gezeigt, in welchem wenigstens ein Filterelement 11 angeordnet ist. Über den zwischen dem Deckel 9 und dem Filtertopf 10 ausgebildeten Ringspalt 17 ist die Filtereinrichtung 1' mit einer Umgebung verbunden. Diesem Ringspalt 17 ist die labyrinthartige Kanalstruktur 5 zugeordnet, die eine Wasserabscheidung bewirkt und zumindest eine bodenseitige Öffnung 6 zum Wasserablauf aufweist. Die labyrinthartige Kanalstruktur 5 wird auch in diesem Fall durch zusammenwirkende und jeweils am Filtertopf 10 und am Deckel 9 ausgebildete Labyrinthbereiche gebildet wird. Die Filtereinrichtung 1' ist dabei auch einer Diagnosepumpe 16 vorgeschaltet, die wiederum stromauf der Filtereinrichtung 1 angeordnet ist. Die Filtereinrichtung 1' der Fig. 7 und 5 sind dabei generell gleich ausgebildet und unterscheiden sich lediglich in der Ausgestaltung der labyrinthartigen Kanalstruktur 5.

Generell können sämtliche Filtereinrichtungen 1 zur Adsorption von Kohlenwasserstoffen oder beispielsweise als Staubfilter ausgebildet sein, wobei letzteres beispielsweise einer Diagnosepumpe 16 vorgeschaltet sein kann, die wiederum stromauf einer weiteren Filtereinrichtung 1 angeordnet ist. Eine derartige Diagnosepumpe 16 kann beispielsweise zur Durchführung eines "onboard-Diagnose" während des Betriebs eines Kraftfahrzeuges verwendet werden.

Die in den Figuren 3 und 5 bis 8 gezeigten Staubfilter / Filtereinrichtungen 1 'sind Teil eines Moduls zur Reinigung der aus einem Tank entweichenden mit Kohlenwasserstoffen angereichterten Luft. Zentraler Bestandteil dieses Moduls ist eine Filtereinrichtung 1 die Aktivkohle enthält, so dass die Kohlenwasserstoffe adsorbiert werden können. Falls eine Diagnosepumpe 16 für die Diagnose der Leckage während des Betriebs des Fahrzeuges benötigt wird, ist es erforderlich in den Ansaugweg stromauf der Filtereinrichtung 1 und stromauf der Diagnosepumpe 16 eine Filtereinrichtung 1' vorzusehen, da sonst die Diagnosepumpe 16 durch den Staubanteil in der angesaugten Frischluft beschädigt wird. Um zusätzlich auch ein Aufweichen des Filterelementes 11 der Filtereinrichtung 1' zu vermeiden, ist es auch hier sinnvoll, eine labyrinthartige Kanalstruktur 5, sprich Wasserfalle, vorzusehen.

Die in den Figuren 3, 5 bis 8 gezeigten Filtereinrichtungen 1' können zusammen mit den anderen Bauteilen des Moduls zur Reinigung der aus einem Tank entweichenden und mit Kohlenwasserstoffen angereichterten Luft in einem einzigen alles umfassenden Gehäuse untergebracht sein, so dass dann auch in diesem Fall die labyrinthartige Kanalstruktur 5 Teil des Gehäuses der Filtereinrichtung 1, bzw. des Moduls wäre. Die genaue Ausgestaltung dieses Moduls zur Reinigung der aus einem Tank entweichenden mit Kohlenwasserstoffen angereichterten Luft hängt von den jeweiligen Anforderungen der verschiedenen Fahrzeuge ab.

## Patentansprüche

1. Filtereinrichtung (1) zur Kohlenwasserstoffadsorption, insbesondere eine Luftfiltereinrichtung,
- mit einem Filtergehäuse (2), in welchem wenigstens ein Aktivkohle aufweisendes Filterelement angeordnet ist,
- mit einem Ansaugkanal (3), über welchen die Filtereinrichtung (1) mit einer Umgebung verbunden ist und über welchen in einem Spülbetrieb Frischluft ansaugbar ist, so ausgeführt,
- dass ein den Ansaugkanal (3) überdeckendes Gehäuse (4) vorgesehen ist, welches eine labyrinthartige Kanalstruktur (5) aufweist, die einen Ends mit dem Ansaugkanal (3) und anderen Ends mit einer bodenseitigen Öffnung (6) des Gehäuses (4) kommunizierend verbunden ist,
- dass das Gehäuse (4) einen integralen Bestandteil des Filtergehäuses (2) bildet,
- dass innerhalb des Gehäuses (4) Abscheidekonturen (18) zur Wasserabscheidung angeordnet sind, **dadurch gekennzeichnet,**
- **dass** die Abscheidekonturen (18) wellenförmig ausgebildet sind und entgegen der Strömungsrichtung orientierte Störkonturen (19) aufweisen.

2. Filtereinrichtung nach Anspruch 1,
**dadurch gekennzeichnet,**
**dass** das Gehäuse (4) aus Kunststoff, insbesondere als Kunststoffspritzgussteil, hergestellt ist.

3. Filtereinrichtung nach Anspruch 1 oder 2,
**dadurch gekennzeichnet,**
**dass** in der Kanalstruktur (5) eine der bodenseitigen Öffnung (6) gegenüberliegende insbesondere oberhalb dieser angeordnete Prallwand (7) vorgesehen ist.

4. Filtereinrichtung nach Anspruch 3,
**dadurch gekennzeichnet,**
**dass** die Prallwand (7) gekrümmt ist.

5. Filtereinrichtung nach Anspruch 3 oder 4,
**dadurch gekennzeichnet,**
**dass** die Prallwand (7) Rippen aufweist.

6. Filtereinrichtung nach einem der Ansprüche 1 bis 5,
**dadurch gekennzeichnet,**
**dass** die Abscheidekonturen (18) einen integralen Bestandteil eines Deckels (9) oder eines Topfes (10) des Filtergehäuses (2) bilden.

## Claims

1. A filter device (1) for hydrocarbon adsorption, in particular an air filter,
- having a filter housing (2) in which is arranged at least one filter element with activated carbon,
- having an intake canal (3) by means of which the filter device (1) is connected to an environment and furthermore by means of which fresh air can be taken in during a flushing operation,
so that,
- a housing (4) covering the intake canal (3) is provided that has a labyrinthine canal structure (5) that is communicatingly connected on end to the intake canal (3) while the other end is communicatingly connected to a floor-side opening (6) of the housing (4),
- the housing (4) forms an integral component of the filter housing (2),
- separator contours (18) are arranged within the housing (4),
**characterised in that**
the separator contours (18) are configured as having undulations and have interference contours (19) oriented in the direction opposite the flow. T

2. The filter device as specified in claim 1,
**characterised in that**
the housing (4) is manufactured of plastic, in particular as a plastic injection moulded part.

3. The filter device as specified in claim 1 or claim 2,
**characterised in that**
an impact wall (7) is arranged within the canal structure (5) opposite, in particular above, the floor-side opening (6).

4. The filter device as specified in claim 3,
**characterised in that**
the impact wall (7) is curved.

5. The filter device as specified in claim 3 or claim 4,
**characterised in that**
the impact wall (7) is ribbed.

6. The filter device as specified in any one of the claims 1 to 5,
**characterised in that**
the separator contours (18) form an integral component of a cover (9) or of a bowl (10) of the filter housing (2).

## Revendications

1. Dispositif de filtre (1) destiné à l'adsorption d'hydrocarbure, en particulier un dispositif de filtre à air,
- avec un carter de filtre (2), dans lequel est agencé au moins un élément de filtre comportant du charbon actif,
- avec un canal d'aspiration (3), par l'intermédiaire duquel le dispositif de filtre (1) est relié à un environnement et par l'intermédiaire duquel de l'air frais peut être aspiré lors d'un fonctionnement en mode rinçage,
réalisé de telle sorte que
- il est prévu un carter (4) qui recouvre le canal d'aspiration (3) et qui a une structure de canal labyrinthique (5) qui est reliée de manière à communiquer d'un côté au canal d'aspiration (3) et d'un autre côté à une ouverture (6), côté fond, du carter (4),
- le carter (4) fait intégralement partie du carter de filtre (2),
- des contours de séparation (18) destinés à la séparation d'eau sont agencés à l'intérieur du carter (4),
**caractérisé en ce que**
- les contours de séparation (18) sont réalisés en forme d'ondes et présentent des contours perturbateurs (19) orientés dans le sens opposé à l'écoulement.

2. Dispositif de filtre selon la revendication 1, **caractérisé en ce que** le carter (4) est fabriqué en matière plastique, en particulier sous la forme d'une pièce moulée par injection en plastique.

3. Dispositif de filtre selon la revendication 1 ou 2, **caractérisé en ce qu'**il est prévu dans la structure de canal (5) un déflecteur (7) disposé à l'opposé de l'ouverture (6) côté fond, en particulier au-dessus de celle-ci.

4. Dispositif de filtre selon la revendication 3, **caractérisé en ce que** le déflecteur (7) est courbe.

5. Dispositif de filtre selon la revendication 3 ou 4, **caractérisé en ce que** le déflecteur (7) comporte des nervures.

6. Dispositif de filtre selon l'une des revendications 1 à 5, **caractérisé en ce que** les contours de séparation (18) font intégralement partie d'un couvercle (9) ou d'un pot (10) du carter de filtre (2).
